# EUROPEAN PATENT APPLICATION

(11) **EP 1 199 652 A1**
(43) Date of publication of application: **24.04.2002**
(21) Application number: 00650155.5
(22) Date of filing: 16.10.2000
(51) Int. Cl.: G06F 17/60, H04L 12/58

(54) **Email processing**

(71) Applicant: Mail Morph Limited, Ballinakill Downs, County Waterford (IE)
(72) Inventor: Nolan, Brendan, County Waterford (IE); Conheady, Gerald, County Waterford (IE); Donnelly, William, Kilkenny (IE); De Leastar, Eamonn, Tramore, County Waterford (IE); Kennedy, Lorcan, County Waterford (IE)
(74) Representative: O'Connor, Donal Henry

(57) **Abstract**

An email received from an email server (2) is delivered to a mail store controller (3) from which it is then stored in a mail store memory (5) with attachments in another storage location (6). The server controller (4) prepares a header for the email classifying the email having regard to what information it can immediately read. The first or initial header is sent to a router (15). The router (15) reads the header and sends it firstly to a profile controller (12) where the header is read and a profile database (13) is consulted which would have been inputted by management with various rules. Then, the header may be augmented with some instruction such as the need to copy another individual with the email and sent back to the router (15) where it is then sent to various conversion controllers (10, 12, 14) where various conversion operations take place. Each time a conversion operation takes place on an attachment, this is carried out by removing the attachment from the attachment store (6), carrying out the operation on the attachment, altering the header to record the particular operation has taken place and then sending the attachment back for storage. A similar process may take place on the other constituents of the email such as the message body or the subject. When all the necessary operations have been carried out in the email to make it understandable by the recipient, the header is delivered from the router (15) back to the server controller (4) which then retrieves the message, attachments and header and delivers to the mail store controller (3) and in turn back out to the email server (2) for subsequent delivery to the recipient.

## Description

### Introduction

The present invention relates to an email processing assembly having a mail server, processors, processor engines and storage means associated therewith for the distribution of an email to an intended recipient in a predetermined format suitable for the recipient, the email having an initial header having email data comprising: routing data including originating data, address data identifying the intended recipient, and constituent data indicating the nature of the email; and content data comprising reference to the components of the email message itself, the email being received in a mail server. Further, the invention relates to a method of setting up such a processing assembly and additionally to computer programs and computers programmed to operate the method and finally, to a user interface and a system for the reception of an email and the processing of it prior to onward transmission to its intended recipient.

There are a wide variety of email attachment formats which must be supported by individual email users. Further, there is an increasing number of upgrades of various computer programs, whether it be simple word processing programs such as Word 2, Word 95, Word 2000, and so on, which require an organisation to incur huge expenses in the need to upgrade to the latest products to support document retrieval over the full range of internal and external emails. The cost of upgrades is becoming increasingly expensive. This problem is exacerbated by the use of complex programs which are not always available. Further, many email attachments are encrypted, compressed, and so on, so that when a recipient receives an email, it is not unusual for the recipient to be unable to open the attachments and a considerable amount of time and effort is often lost before an email attachment can be read by the intended recipient.

A further problem for the management of organisations is that very often, they wish to control the dissemination of emails within the particular organisation. For example, if the content of the email indicates that the email should be copied to other people within the organisation, then it is very important that there be some way to define the constituent data of the email such as to ensure that it is correctly transmitted throughout the organisation and not just simply to the addressee of the email.

As explained already, it is a major cost in many organisations. It is the cost of upgrading application software for the creation of new documents and the need to upgrade software for the whole organisation, when, in practical terms, it only needs to be upgraded for one section or division of the company. For example, one could well imagine a situation where one division of a company, for example, the research and development department, would require the most sophisticated CAD drawing system, which system would not be required by the remainder of the organisation. However, if documents are to be freely transferred between the R&D department and the rest of the organisation, all the other users have to be able to receive and open attachments from the R&D department. Thus, effectively, any intended recipient has to have his or her computer or other processor updated on a regular basis with the latest CAD software which is not required for the recipients own use. Thus, what is required within an organisation is for members of the organisation to be able to communicate with each other by email without the necessity of either the sender having sufficient software to convert all emails into a format understandable by the recipient or alternatively for the recipient to have all conversion software available which will allow any email message and in particular, any attachment of an email message, to be successfully opened and read.

The problem becomes worse when email messages from external sources are being dealt with. Very often, the recipient of the email is provided with an email with an attachment that cannot be opened and the recipient has to engage in a considerable amount of trial and error until the format of the message is identified and the email message can be read. In many instances, it cannot be and it requires that it be sent back to the sender for decoding, all of which leads to delays. In many instances, people do not read their emails immediately on receipt, however, when they do wish to read them, they want to be able to read them immediately, rather than have to engage in lengthy and time consuming work to accept the email and bring it into a form suitable for reading.

Ideally, what is required is that the generator of an email, whether it be an internal user or an external user, should be able to prepare the email in the format that is suitable to them and having prepared the email, should then be able to transmit that email to the recipient without any further difficulty. In turn, the recipient should be able to receive the email without the recipient having to do any time consuming and costly work. The recipient should be able to receive the email without any further difficulty. Further, when emails are received from senders, particularly external senders, ideally it should be possible for anyone within the receiving organisation, when sending an email to the original sender to so arrange that the format of the sending email should be such as to be in a form suitable for reading by the new recipient, namely, the former sender.

While at the same time, it is known, for example, to have various standard conversion document tools, most of such conversion tools require some form of user interaction such as, for example, the product produced by ACI which allows documents to be emailed to a server and return converted. However, it does not interact directly with the email and involves user action. A conversion system has been proposed by ANE which develops the concept of the automatic filtering of emails. They install conversion engines at email gateways. The product sold under the trade mark KEYPAK is undoubtedly useful, however, it does not lend itself to other applications.

While it is accepted that email engine processors are well known, such as, those used in centralised email virus scanning, for example, an email virus scanning program sold under the trade mark MIMESWEEPER, the systems such as MIMESWEEPER work on the gateway intercepting messages and checking them before the reach the email server.

None of these systems solve the major problems of ensuring that the emails are handled in an efficient and timely manner.

It is not suggested that the automatic format conversion of data is not already well known. Such, for example, is described in US Patent Specification No. 5,911,776 (Guck) or in US Patent Specification No. 5,848,415 (Guck) where selective multiple protocol transport and dynamic format conversion in a multi-user network is described. Indeed, for example, in US Patent Specification No. 5,283,887 (Zachery) there is shown, in a data processing system having an email system, ways of sending documents from a first user to a recipient second user and having means for creating and editing documents in different formats. The recipient user has a conversion engine using a table of user document format preferences and a document format facility. This latter specification explains why decreeing that a common document format be used is usually not feasible over a large diverse group. Further, it acknowledges that the use of document conversion utilities to convert documents from one format to another is generally unsatisfactory in the sense that the recipient of the documents has to perform separate individual conversion processes on each document received. As remarked already, this results in a substantial waste of the user's time due to having to carry out this document reformatting. This US Patent Specification No. 5283887 (Zachery) describes a relatively complex operation in which in a data processing system having an electronic mail system for sending documents from a first user to a recipient user and, for each user, a means for creating and editing documents, the documents having different formats. It describes a method for converting a document having a first format into a document having a second format preferred by the recipient user using a table or user document format preferences and a document format conversion facility. The user preference table contains for each user, an entry specifying the document format preferred by the user and appended to each document to be sent to a recipient user is a tag which includes a field specifying the user to receive the document and a field specifying the first format of the document. This then is all fed to a document conversion facility and when the document format field is a tag of a received document, it is compared with the preferred document format field of the user preference table entry of the recipient user. If they are different, then the document conversion facility converts the document from the first format to the preferred format. Again, a relatively complex system which requires knowledge of the formats of the email being sent. The problem is that it essentially does not overcome two major problems. Firstly it takes no account of the need for management to control the format and dissemination of emails within large organizations, nor will they act upon e-mails that are sent internally within an organization.

The terms viewing, reading and understanding in respect of emails are used interchangeably in this specification and are also to be understood as including the possibility of the email being a voice message.

The present invention is directed towards overcoming these problems and providing an efficient method for the distribution of an email to an intended recipient in a predetermined format suitable for the recipient. Further, the system provided should do this conversion automatically and immediately the email is received. What is required is an automated process that runs on a server and can be used automatically. Further, any system should cover the full range of emails received and not just simply the problems relating to conversion. There is a need for providing management of corporate strategy and to allow exceptions to general corporate application strategy to be carefully managed and monitored. Further, in many situations, various conversions will be required which conversions are not necessarily required by everybody, for example, a spreadsheet could be converted into a word processing document, into an internet page, or embedded in a mail message but obviously not everybody would require such a service. Therefore, it is essential that any such system should be able to automatically accept such a conversion or processing as required. Further, it is desired that as additional conversion engines become available, such conversion engines can be easily added to the system without the need for a complete redesign of the system.

### Statements of Invention

According to the invention, the method is characterised in that the following steps were carried out, prior to receiving the email, to prepare the processing assembly to carry out the method:-
providing a plurality of classifications of emails from possible types of constituent data; and
allocating at least one operation with a suitable instruction associated therewith to be carried out for each classification as a classification instruction list;
and in which, on an email message being received, the steps are carried out of:-
accepting the email from a mail server in a mail store memory;
allocating a classification to the email;
preparing a system header from the classification and the email data;
storing the email message with the system header in at least one unique location in a mail store database;
reading the system header;
retrieving the appropriate instruction from the classification instruction list;
sending an instruction to carry out the operation on the message;
retrieving the message from the mail store database;
carrying out the operation on the message;
entering a record of the completion of the instruction in the header to provide a revised system header;
storing the email in the mail store; and
reading the revised system header and if the email is suitable for sending to the intended recipient, transmitting the email in accordance with the routing data in the system header.

The advantage of this is that when an email is delivered to a server, the email is converted into a readable or understandable form for the recipient, prior to the recipient accessing the email. Various other advantages and features will be described below.

When the classification allocated to an email requires the carrying out of more than one instruction, the instructions are carried out in a predetermined order, the system header being updated each time an instruction is carried out to provide a new system header. The advantage of this is that the header which is usually in XML language or can preferably be in XML language, is used to control the operation and the email itself is not transmitted around the system. It is stored and retrieved as required.

When, on carrying out the instruction or the last of the instructions, the email is not suitable for sending:
the header is read again;
a new classification is allocated to the email;
a new system header is prepared from the new classification and the routing data; and
then the operations required by the new system header are carried out.

This is one of the great advantages of the present invention. For example, suppose an email were to be received that required decompression. It might not be possible to fully classify the email until the decompression had taken place because one would not know the format of an attachment, for example. Thus, the first task would be to decompress the email or to decrypt it, as the case may be, and then other operations might have to be performed. Indeed, one could see a situation where certain attachments might have to be, not alone decompressed and reformatted, but decompressed, decrypted and reformatted, thus requiring many reiterative classifications. This is all carried out without human intervention.

In one method according to the invention, on reading the email data, additional routing data is provided. An example of this would be where management had previously decided that any emails going to one particular department were to be copied to another department or to some other individual.

Ideally, the classifications are chosen from one or more of:-
single recipient with no attachment,
single recipient with multiple attachments,
single recipient with compressed attachments,
single recipient with encrypted attachments,
multiple recipients with no attachments,
multiple recipients with multiple attachments,
multiple recipients with compressed attachments,
multiple recipients with encrypted attachments.

It will be appreciated that many other classifications could be used, however, the above listing contains the typical classifications that are prevalent at the present moment.

The email or routing data can comprise one or more of:-
message ID,
number of recipients,
recipient addresses,
data received,
original address,
original display name,
subject,
message text,
size of email,
encoding format,
encryption,
external origin,
internal origin, and
priority attached.

When there are attachments, this can comprise one or more of:-
name,
path,
position, and
type.

The classification can be chosen having regard to any particular email data such as, for example, the routing data or any other suitable data.

Ideally, on retrieving the instruction from the classification instruction list:-
the instruction is stored in a processors routing database as a queue for a processor engine chosen to carry out the operation in response to the instruction;
the processor engine accesses the instruction;
the message is retrieved from the mail store database;
the processor engine carries out the operation on the message; and
the revised system header is returned to the routing database for further routing of the email.

In this way, at any particular time in the processing, the situation as regards any email is recorded and secondly, as pointed out already, the total control is based on the header.

Ideally, the preparation of the system header includes allocating a priority to the email. Such priority may be used to queue the emails in order of priority for the carrying out of an instruction. Generally speaking, emails will be transmitted relatively quickly, however, if there should be any delay in service, etc., it will always be possible to prioritise some of the emails.

It is envisaged that on an instruction requiring a specific operation to be carried out for which there is more than one processor or more than a number of processors capable of carrying out the instruction, the header is read and optimum choice of the processors is made.

Ideally, in this latter method, there is provided a processor resource database in which are contained all the processors for carrying out a particular instruction listed singly and in combination as individual processor engines, a system resource usage is listed for each processor engine and a processing time for the instruction to be carried out is listed for each processor engine.

Generally speaking, the priority allocated is compared against the resource usage and the processor time to obtain the optimum processing schedule. Thus, for example, it might occur, in some instances, having regard to the message and content, that a processor, other than a processor under the direct control of the processing assembly system, might be used, that is to say, a processing engine forming part of the assembly, for example, as a permanently stored piece of software. For example, it might be decided to use an externally located processor, in which case it would be automatically accessed as is any external service provider.

Ideally, on receiving the same email for transmission to more than one recipient, each time the email is retrieved for transmission to another recipient, if the instruction is identical, the previously transmitted email is transmitted to the new recipient. This avoids unnecessary processing.

Further, on transmitting the email, the identifier of the sender is stored together with the instructions carried out for transmittal between sender and recipient and on the subsequent sending of an email to the original sender, the instructions are retrieved and used to reformat the outgoing email for ease of receipt by the original sender. The great advantage of this is that when a reply needs to be sent, the reply can be sent in the correct format for the recipient's understanding. This can be particularly important in companies that are providing a service to clients where it is vital for the company to ensure that their client receives the information in a format that the client can read or understand. There is obviously no point, for example, in a company producing a drawing in a most up-to-date format of a particular drawing system, which up-to-date format is not available to the client.

Further, the invention provides a method of setting up a processing assembly having a mail server, processors and storage means associated therewith for the distribution of an email to an intended recipient in a predetermined format suitable for the recipient, the email having an initial header comprising email data including routing data including operating data, address data identifying the intended recipient; constituent data indicating the nature of the email; and content data comprising reference to the components of the email message itself, the email being received in a mail server characterised in that the initial steps are carried out of:-
providing a plurality of classifications of emails from possible types of constituent data;
allocating at least one operation with a suitable instruction associated therewith to be carried out for each classification as a classification instruction sheet so as to allow the processing assembly to, on an email message being received, carry out the steps of:-
   accepting the email from a mail server in a mail store memory;
   allocating a classification to the email;
   preparing a system header from the classification and the email data;
   storing the email message with the system header in at least one unique location in a mail store database;
   reading the system header;
   retrieving the appropriate instruction from the classification instruction list;
   sending an instruction to carry out the operation on the message;
   retrieving the message from the mail store database;
   carrying out the operation on the message;
   entering a record of the completion of the instruction in the header to provide a revised system header;
   storing the email in the mail store; and
   reading the revised system header and if the email is suitable for sending to the intended recipient, transmitting the email in accordance with the routing data in the system header.

Indeed, it is envisaged in accordance with the invention that on receiving an email, the email is transmitted to the processing assembly remote from the recipient of the email and the email is re-transmitted to the recipient in the predetermined format. Thus, it is envisaged that part or all of the processing of the email can be carried out in a jurisdiction remote from where the email will eventually be read. Thus, effectively, a person receiving an email in one jurisdiction can send it out of the jurisdiction for processing and then retrieve it again in the original jurisdiction.

Ideally, the invention will be carried out by providing a computer program comprising program instructions for causing one or more computers to carry out the method. That computer program can be embodied in a record medium, a computer memory, on a read only memory, or indeed in any particular way and similarly, the invention can be carried out by providing a computer program to carry out the method.

Further, the invention is directed towards the provision of emails processed in accordance with the method of the invention. It is envisaged that an email which was originally in one format and which has had a transformation to another format carried out by the method according to the invention, in which the transformation was carried out remote from the recipient, is protected by the invention.

Further, the invention provides a user interface for the conversion into an understandable form of an email received for onward transmission to an intended recipient where the email is not in a format suitable for reading by the recipient said conversion being performed by apparatus capable of receiving the message and having processing engines for receiving the email and converting it into the required format, the apparatus being programmed to carry out the method as described above.

Further, the invention provides a system for the reception of an email and the processing of it prior to onward transmission to its intended recipient comprising:-
a mail store controller for receiving the email, including a server controller for reading the email and generating and writing a header for the email to classify the email;
a plurality of processors; and
a router for receiving the header of the email and in accordance with the classification, to determine the processors to which the email is to be sent and the order in which it is to be sent to the processors prior to the email being sent on to the recipient.

Ideally, in this system, there is provided a separate store having a unique location for each attachment.

Preferably, each processor is a separate stand alone processor connected only to the router and in which there is provided:-
a database to store headers for forming a queue for each processor;
means to retrieve the attachment from the store for processing and to return the processed attachment to the store;
means to enter into the header confirmation of the processing; and
means to return the updated header to the router.

In one embodiment of the invention, there is provided a profile controller and associated profile database for the reception of management information. The profile controller being connected to the router to alter the header in response to the information in the profile database. The great advantage of a profile controller is that management can now decide how emails should be distributed, how they should be stored or anything else. For example, management might decide that, on scanning the content of an email, it needed to be copied to another department within an organisation and so on.

As explained already, one or more of the processors may comprise a processor operated by a third party in which case the router includes means to establish a communications link with the processor.

Ideally, there is provided a processor engine database in which there is listed the processor engines available for carrying out a particular processing operation both singly and in combination together with its system resource usage and means for allocating a processor engine or processor engines to carry out the particular operation having regard to the information in the database.

### Detailed Description of the Invention

The invention will be more clearly understood from the following description of some embodiments thereof, given by way of example only, with reference to the accompanying drawings, in which:-
Fig. 1 is a block diagram of hardware and main functional modules of the invention,
Figs. 2 to 7 are block diagrams of hardware and the main functional elements of the transmission of an email with no attachments,
Figs. 8 to 12 are views similar to Figs. 2 to 7 of the transmission of an email with one attachment,
Figs. 13 and 14 are views similar to those of Figs. 2 to 12 of the transmission of an email with compressed attachment, and
Figs. 15 to 18 are flowcharts of one method according to the invention.

It will be appreciated that the invention will be carried out by a number of processors, processor engines, computers and the like, all of which are of essentially standard construction and do not require any further elaboration. One or more computers may indeed be used and the method according to the present invention will be largely embodied in software. Thus, for example, the system and apparatus according to the present invention could be carried out by a computer connected directly to the mail server or indeed a program incorporated directly into an email server. Further, the program could be carried out remotely from the server. Indeed, in many instances, it will be, in that the server may be located in one jurisdiction and the processors or computers operating the system could be located in a separate jurisdiction a considerable distance from the mail server.

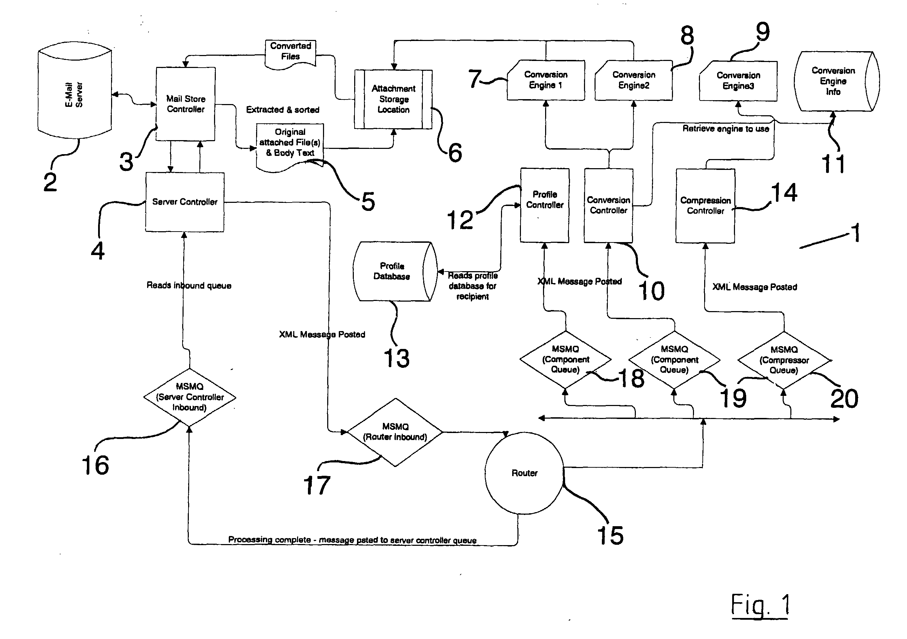

Referring to Fig. 1, there is illustrated a system indicated generally by the reference numeral 1 which is an amalgam of a hardware block diagram and main functional modules according to the invention, illustrating in brief, the use of the invention and at the same time, its main components. The hardware elements are illustrated separately while in practice they would probably all be provided by the one computer. Further, the division between components such as the mail store and its controller are arbitrary and chosen to illustrate and explain functionality.

There is provided a mail server 2 feeding a mail store controller 3 which in turn is connected to a server controller 4. The mail store controller 3 is connected to a mail store memory 5 and an attachment storage location 6 which in turn is connected to processors or conversion engines 7, 8 and 9 respectively. Further, the conversion engines 7 and 8 are then connected to a conversion controller 10 which is fed from a conversion information database 11. A profile controller 12 is fed from a profile database 13 which is adapted to receive and store management controls. The conversion engine 9 is a decompression engine controlled by a compression controller 14. A principal feature of the invention is a router 15 which is connected to the server controller 4 and in turn to the controllers 10, 12 and 14 through queues. The controllers 10, 12 and 14 are effectively processors which ensure that the correct operation is carried out. They are effectively stand-alone processors connected to the router. However, all the connections are not shown and mainly the functional connections are shown as are various queues 16, 17, 18, 19 and 20.

Additionally, in practice, there will be many more than two conversion engines. Indeed, there will be many types of processor to perform tasks on the email whether conventional conversion, collection and storage of metrics, management tasks and so on.

It is worth considering briefly how the invention operates before describing it in more detail and describing in more detail the many types of emails that will have to be processed. Such emails will include:
a single recipient with no attachments,
a single recipient with multiple attachments,
a single recipient with compressed attachments,
a single recipient with encrypted attachments,
multiple recipients with no attachments,
multiple recipients with multiple attachments,
multiple recipients with compressed attachments,
multiple recipients with encrypted attachments, and
other classifications of emails may be often experienced. Similarly, any email that is received will have some form of routing data obviously including originating data and address data identifying the intended recipient and constituent data representing the nature of the email such as, for example, the attachments. Finally, there will be content data comprising reference to the components of the email itself. One can readily see that such data would include:-
message ID,
number of recipients,
recipient addresses,
data received,
original address,
original display name,
subject,
message text,
size of email,
encoding format,
encryption,
external origin,
internal origin, and
priority attached.

Further, when there are attachments, then the data will comprise one or more of:-
name,
path,
position, and
type.

It will again be appreciated that all this data and the various types of email message will then lead to what is effectively a classification for the email.

To get an idea as to the complexity and the work required in relation to an email, it may be worth posing a situation which will happen in a company in receiving an external email. The recipient of the email may be Mr A in department Alpha which email was sent from company X which compresses messages and attachments. Obviously, before the email can be finally sent to Mr A, the message and attachment must be decompressed. When the attachment has been decompressed, then the attachment must be provided in a form suitable for Mr A. It may have arrived in one word processing program and Department Alpha may insist that all documents are received in Department Alpha in Word 95. The attachment requires firstly the decompression of the message and attachment and, until that attachment had been decompressed, the identity of what format it is in may not be known. When the attachment had been decompressed, then it becomes necessary to convert it into the suitable format, namely, Word 95, presuming it was in a format other than Word 95. However, the complexities do not end here. For example, management may have a rule which states that all data, letter, correspondence, etc. receiving from company X must be copied into a specific file, file company X, which is a separate file maintained by the company. That could be a straight forward management rule caused by the source address. Then, further, there might be a rule specifically for Mr A in that all emails sent to Mr A had to be copied to his assistant Mr. B. Thus, it will be seen that there could be a large number of operations required to be carried out on the email prior to Mr. A being able to retrieve the email from his or her PDA computer, PC, mobile phone or whatever other terminal Mr A uses to access email messages. It will be appreciated that to carry this out manually with existing techniques, is not just simply time consuming, difficult, and expensive, but it practically defeats the main object or feature of the email system, namely, instant, easily available information transferred between one user and another, whether by way of personal computers, main frames, mobile phones or indeed any text input or output devices.

Still keeping it relatively simple and referring again to Fig. 1, for example, a message is delivered from the email server 2 to the mail store controller 3 and then the mail store controller 3 will accept the message and store the body of the message in the mail store memory 5 . Then, the attachments will be stored in attachment location 6. Rejection can occur when the email is unacceptable for some reason as happens in any system. The server controller 4 will prepare a header for the email classifying the email having regard to the information at that stage available, such as, for example, emails without attachments, emails with attachments, and so on. The various other data incorporated in the email will also be used so that the server controller 4 produces a first header or an initial header which will allocate a classification to the email and update the header from that classification and the routing data that it has available to it. Then, this will be sent to the router in bound queue 17 as an XML message. Any suitable format other than XML could be chosen. The router 15 then reads the header and posts the message to the component queue, namely, the profile controller queue 18. The profile controller 12 will read the header and will then consult the profile database 13 which will have been inputted by management with various rules. Thus, for example, this would be the time where the rules regarding copying the email message to Mr. B would be retrieved and the header would now be altered or updated by the profile controller 12 and sent back to the router queue 17 with this command. Also, any other information that would be necessary would be added into the header, such as, for example, the format for the message to Mr. A of the department Alpha.

There is now either a full header that will allow the whole email message to be resolved or there is not. In either case, the header is now sent back to the router queue 17 and from the router queue 17, the router 15 reads it, and presuming that it now has to be in some way converted, it is sent to the component or conversion engines queue 19 or to the compression engine queue 20. Thus, when sent from the queue 19 to the conversion controller 10 it reads the necessary conversion information from the conversion engine database 11. This in turn is used to instruct the conversion engine 7 or 8 to take from the attachment location 6 , the attachment, carry out the necessary conversion on it, deliver the now converted attachment back to the attachment storage 6, confirm the task has been carried out to the conversion controller 10 and then deliver the header back to the router queue 17. Presuming no further conversions are required, then the header is delivered from the router queue 17 back to the server queue 16 via the router 15 and from the server queue 16 to the server controller 4 which then retrieves the message, attachments and header, delivers to the mail store controller 3 and in turn, the message is now delivered out to the mail server 2.

If decompression was required, it would have been first sent to the compression queue 20, the compression controller 14 and then to the conversion engine 9 for decompression.

However, if, for example, the original message had been compressed, all that might have been done would have been to deliver the initial header to the router 15 where the first operation would have been in some conversion engine to decompress the attachment and after the attachment had been decompressed, it might then be necessary to re-classify the message, produce a new header and proceed then with the second stage of the operation, namely, to change the compressed message into the correct format.

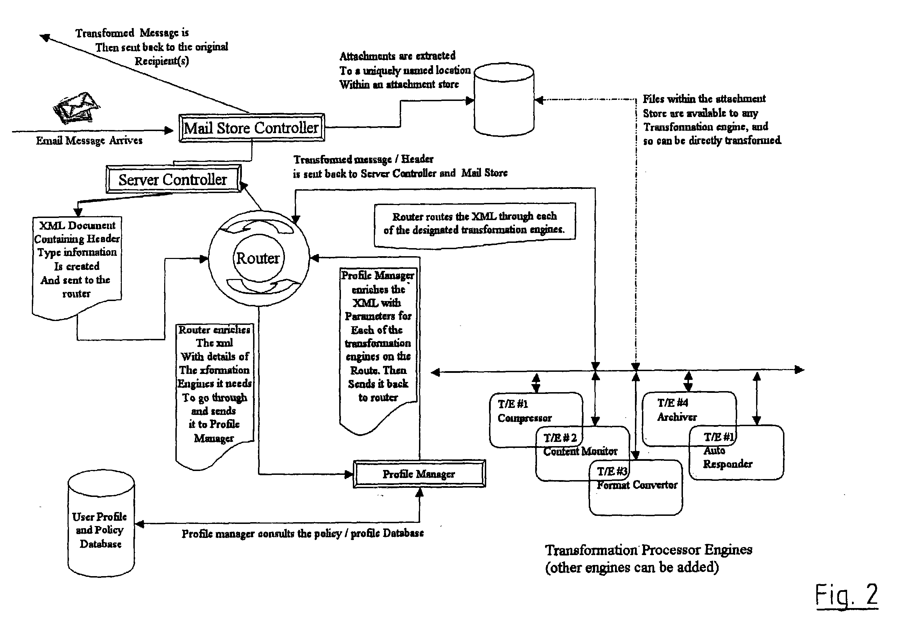

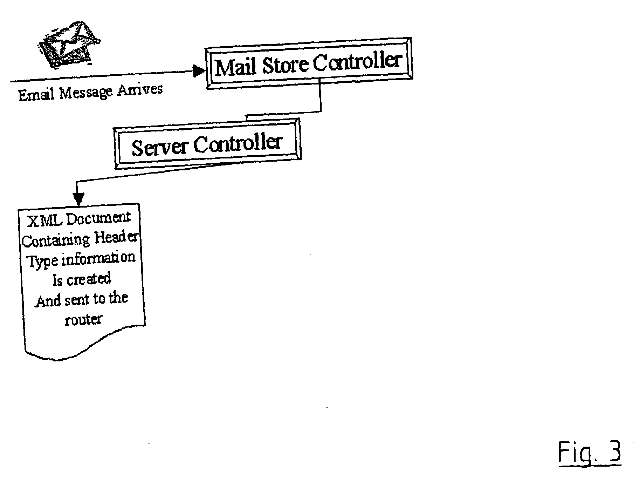

Figs. 2 to 7 illustrate progressively alternative block diagrams showing various components of hardware and the flow of information throughout the system for the delivery of an email without attachments. Fig. 2 is a broad outline of the system and Figs. 3 to 7 illustrate the flow of information and the execution of tasks or operations on the email. In summary, the email message arrives and is accepted by the mail store controller and then the server controller produces an XML document containing header type information which is then sent to the router. The router enriches the XML header with details of the processors it needs to go through and sends this to the profile controller. The profile controller further consults the user profile and policy database to obtain further information with which the profile controller then enriches the header still further with other information to control the various conversion engines or processors. Then, the router sends the header information to each of the designated transformation engines or processors and each processor engine carries out the necessary task in turn by retrieving the files from the attachment store and directly transforming as required. These processors could be, for example, as shown, something for decompression, it could be an engine to monitor the content, it could be a format converter, it could be archiving, it could be automatic response, namely auto responder, it could be a language translator, and so on. The number of conversion or transformation engines is endless.

Dealing now with Figs. 3 to 7 inclusive, the first situation dealt with is an email message with no attachments. There is illustrated in Fig. 3 the email message which has arrived at the mail store controller and the server controller prepares header type information as an XML document for sending to the router. The XML document will contain the header information that describes the email. This will include, for example, the addressee, the originator, the subject, an assigned unique identifier, the direction of the email, outgoing or incoming, the message classification such as explained above, in this case, class 1, namely, an email message to a single user with no attachments.

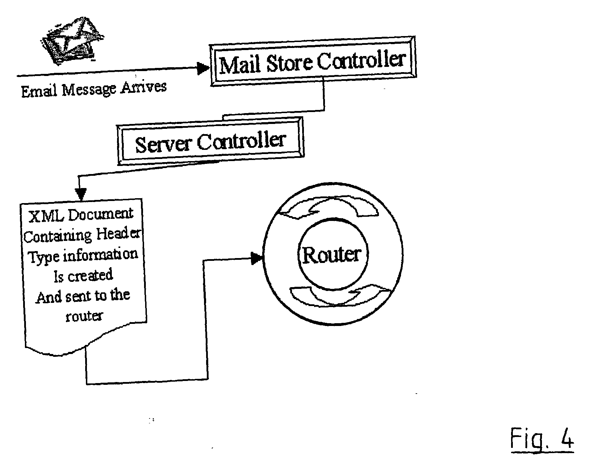

In Fig. 4, the XML document, that is to say, the revised- header, has been received in the router and the router determines that this is the first time through the system so it needs to assign some route. The route is determined by looking up a table for the initial classification which is classification number 1 and once this route is determined, the header is enriched with the route information. This is basically a list of the transformation engines that the message will be processed through and the order in which the processing will take place as will become apparent from the description below. Indeed, in this particular example, for a message with no attachment, the route for the message will be to deliver the message straight back to the server and mail store controllers for forwarding the mail to its intended recipient and to the metrics controller so that a record that the message has been processed and the time it has taken, can be recorded.

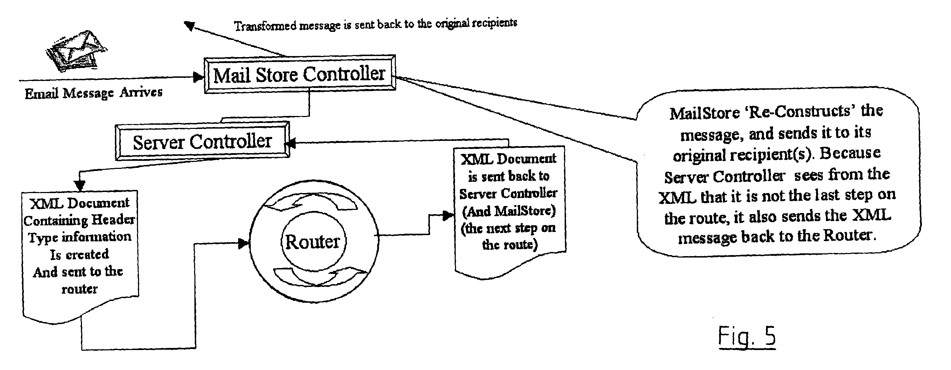

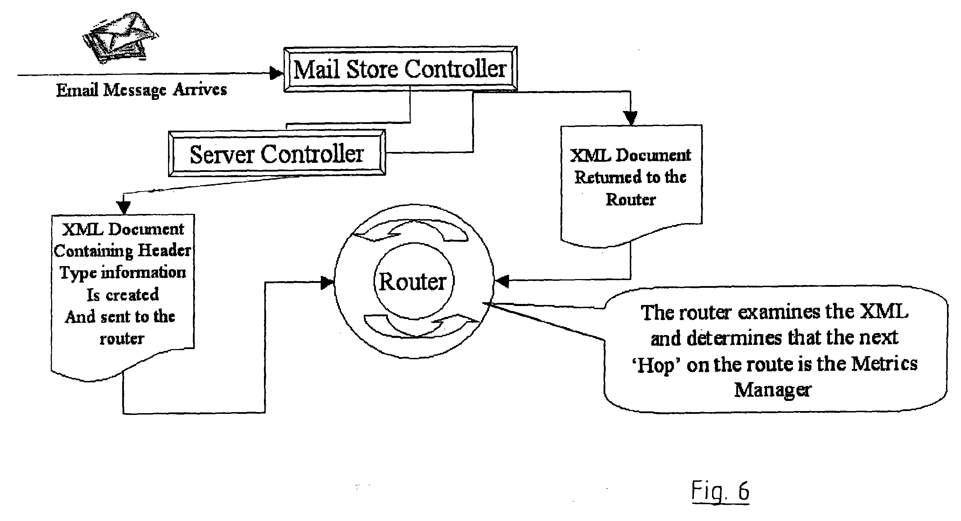

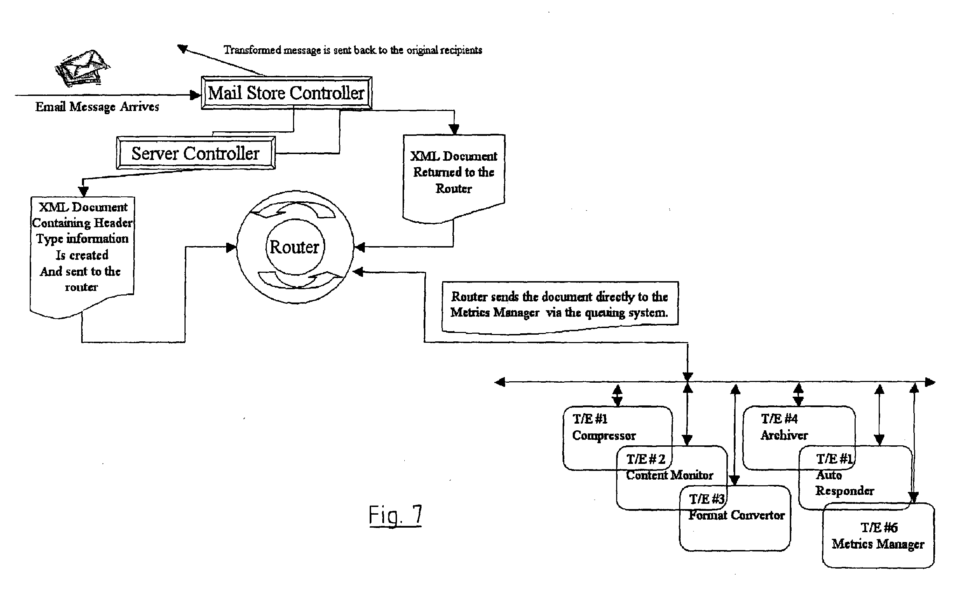

Then, as shown in Fig. 5, the header, namely, the XML document is sent back to the server controller and then the mail store, the mail store retrieves the email and dispatches it onwards. Because the server controller will also see from the header, namely, the XML message, that it is not the last step in the route, it will then proceed to send the message back to the router. This is shown in Fig. 6. When the message is received in the router, the router examines the header and determines that the next step is to deliver the message to the metrics manager. Then, as shown in Fig. 7, the manager sends the document directly to the metrics controller via the queuing system. The metrics controller updates the metric database based on the metric information contained within the header, namely, the XML message. It notes that it is the last step in the journey and it will then destroy the header so that now the email has been dispatched and the metrics controller database noted with the necessary information.

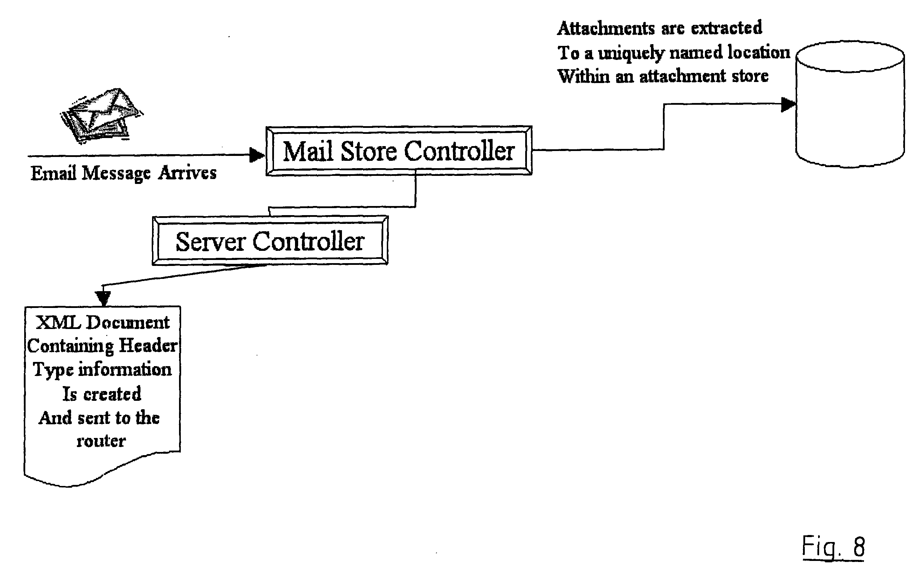

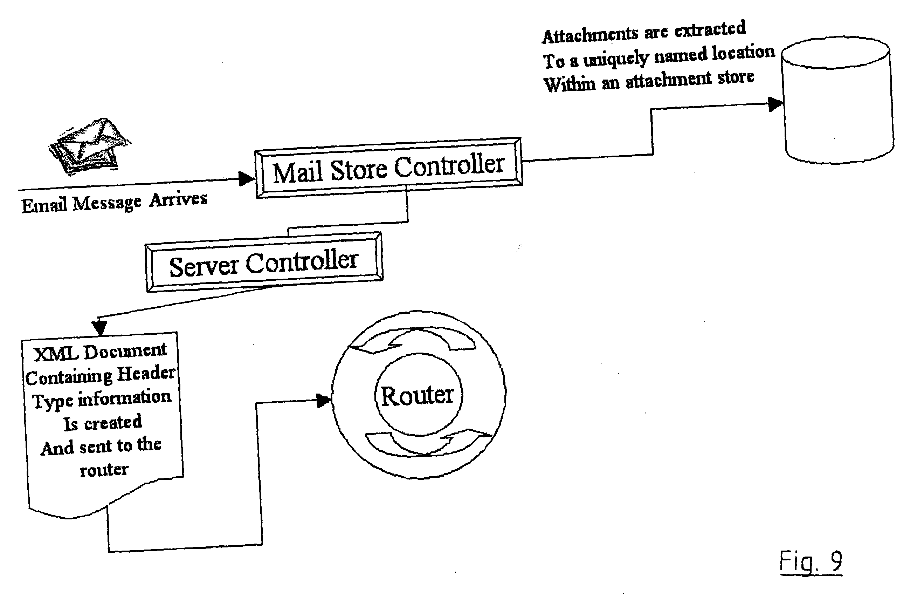

Referring now to Figs. 8 to 12 and initially to Fig. 8, where there is illustrated the start of the transmission of an email message with one attachment. When the mail store controller receives the message, the initial header is prepared by the server controller and the attachments are extracted to a uniquely named location within an attachment store. Then, as shown in Fig. 9, the header is delivered to the router with all the usual information as heretofore given, except that it will now be known as a classification 2 or some other appropriately identified classification for an email with an attachment. The router again determines that this is the first time through the system so it needs to assign to it a route. The route is again determined by the table look-up for the message classification number 2 and once this route is determined, the header is enriched with this route information. All of this is the same as before.

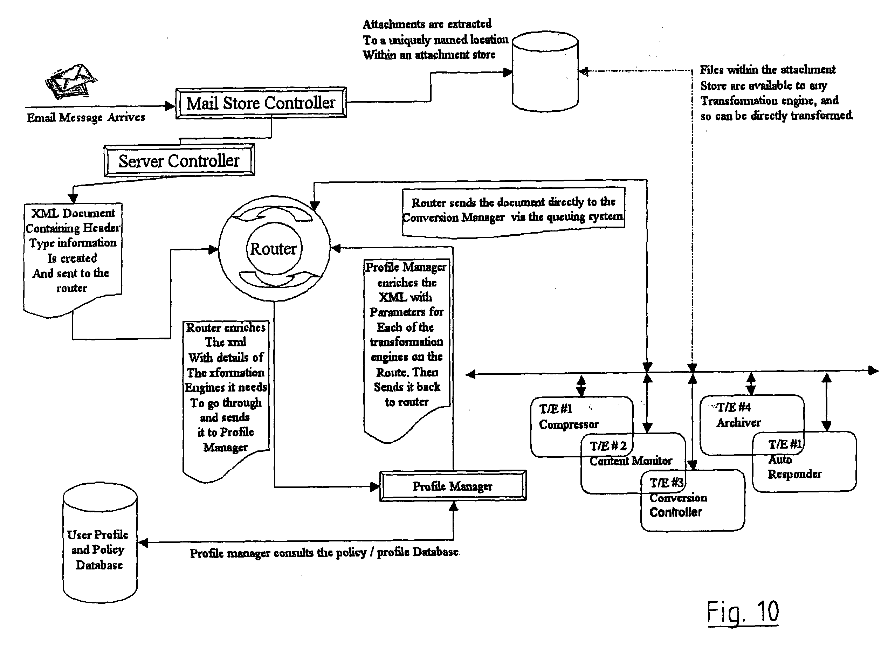

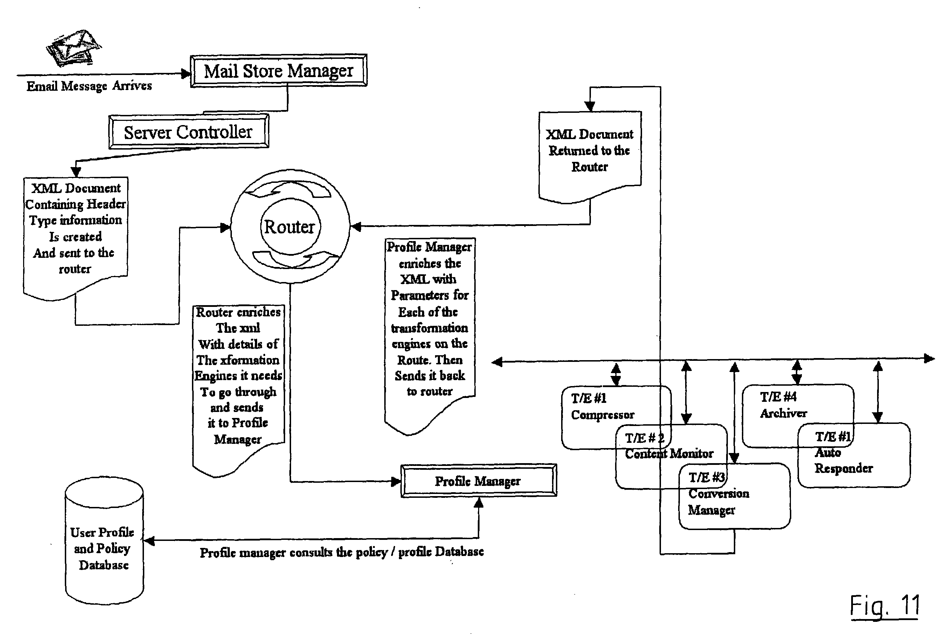

Then, as shown in Fig. 10, the processing is carried out as before, however, in this embodiment, there is shown a conversion controller which determines that conversion and localisation needs to take place and therefore, the conversion controller can decide possible different routes through the various conversion engines. For example, one could imagine that if it was Word 2000 that had to be converted, it might first be converted to Word 6 and then it might then be converted to Word 5. This is an unlikely happening but it could be possible in the way in which it would be done. Each conversion engine then takes the file from the attachment store so that it can be directly transformed. Because the conversion engine, like all transformation engines, has direct access to the attachment store, the conversion and localisations can be carried out directly on the file. Once the conversion controller has completed all the required format conversions and localisations it consults the header, namely the XML message, again. From this, it determines if it is not the last step on the route so that the file, fully converted, is returned to the attachment store while the header is sent back to the router (Fig. 11) where whatever still needs to be done, for example, delivery to the metrics manager, etc., is carried out

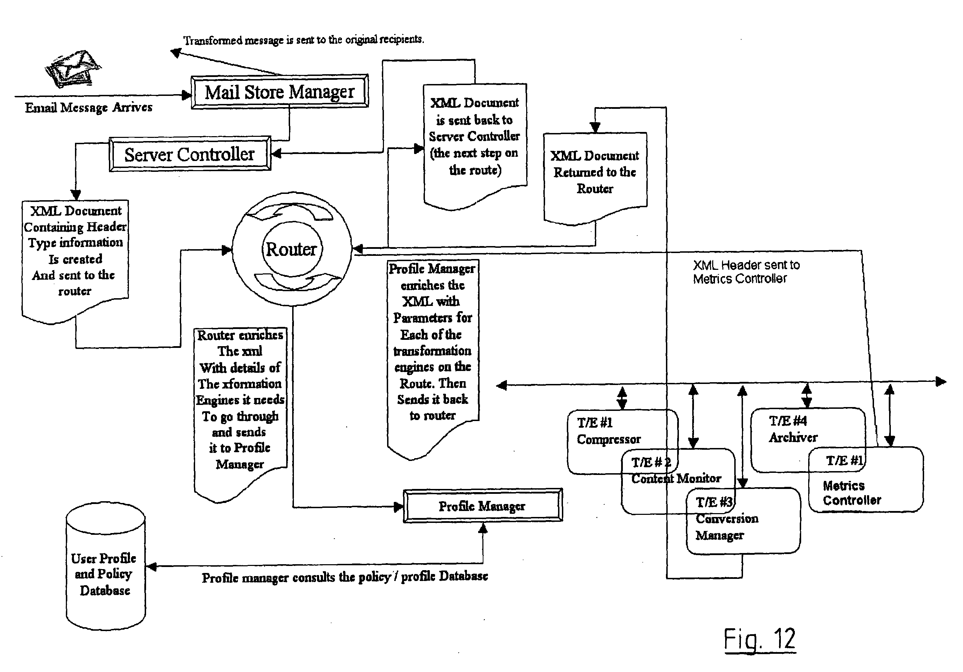

Each time a transformation engine carries out a step on the attachment or any other task, the updated header is returned to the router. Finally, when all the work has been carried out, the header is sent back to the mail store and the server controller. Again, as before, the server controller sends the header back to the router where, as before, the router sends the header to the metrics controller, the controller updates the metrics database and then destroys the XML message as shown in Fig. 12.

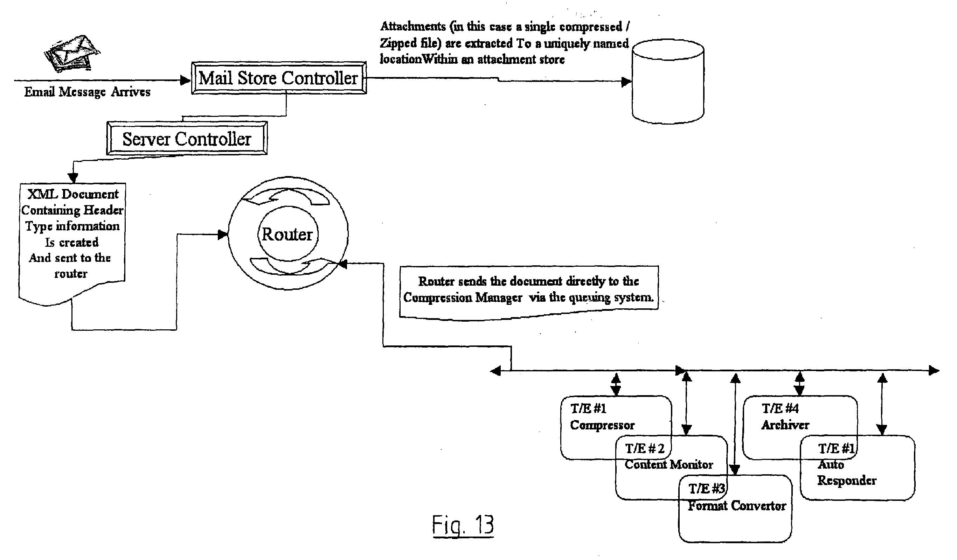

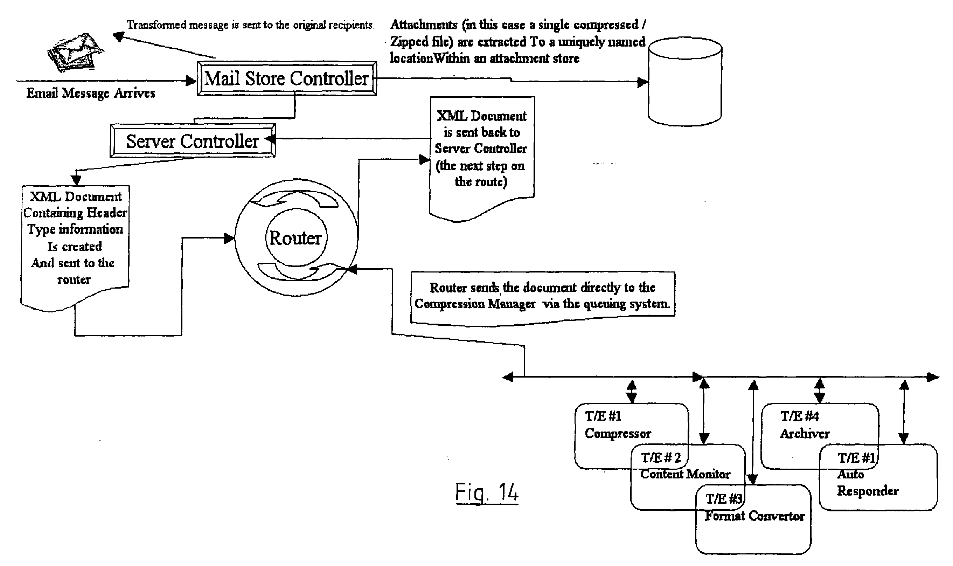

Referring now to Figs. 13 and 14 and initially to Fig. 13, when there is an email with a compressed attachment, everything happens the same as before, except that the first thing the router notices is that the attachment is compressed because this has been entered into the header and the router sends the document directly to a compression controller via the queuing system which in turn allocates the task to a compressor processor, which compressor processor does the decompression in the same way as any other operation is carried out on the attachment, retrieving the attachment from the store and returning the attachment to the store. Then, the router receives the amended header or XML message updated to show it is now decompressed and can be read. Then, as shown in Fig. 14, the header is sent back to the server controller where it sees that it has now been decompressed and now requires a new classification. Then, the email is reclassified and is treated by the mail store controller as a brand new message. The message, reclassified in the normal manner, has the attachment which is now ready to be further processed. Thus, for example, suppose it was encrypted, then decryption would have to be carried out and it might be reclassified as an encrypted message, however, presuming it is not, then it would now be classified as a message with attachment and the steps that were described with reference to Figs. 8 to 12 are carried out.

One of the key advantages and attributes of the system according to the present invention is extensibility. This extensibility is achieved through allowing a basic framework to house transformation engines with an almost infinite variety of functions. It is the header that is handled and the transformation or working engines or processors are simply add-ons to the system. No transformation or processing engine has any knowledge of any other. They are each operated separately. All that is required is that a transformation engine be able to read and understand the header, which header is constantly changing. The header is used as the item which is delivered throughout the system and then attachments, for example, are only removed when required by a processor or transformation engine. Further, all the routing is controlled by the router and various queues are established throughout the system. It is important that once an engine has completed a transformation or a processing, the message is not sent to the next engine but it is sent to the router and the next queue so that all the transformation engine requires is the header message to enable it to extract the attachment or whatever it is that is required to be worked on, process it and re-store it.

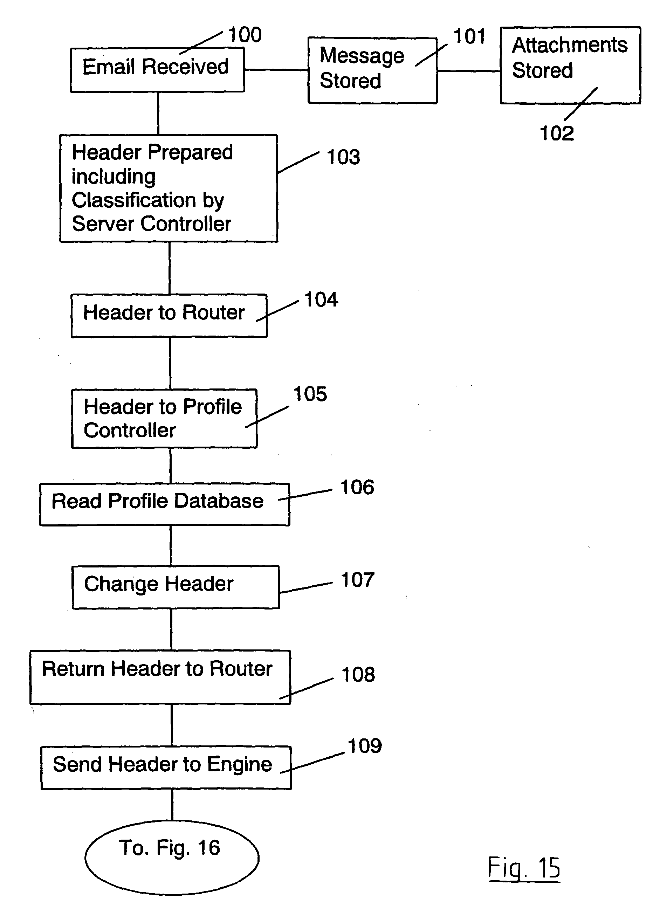

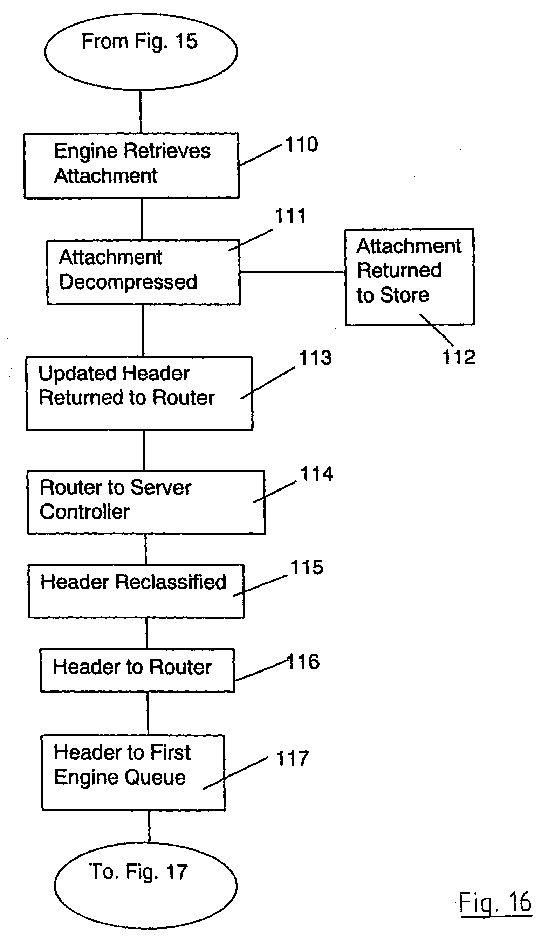

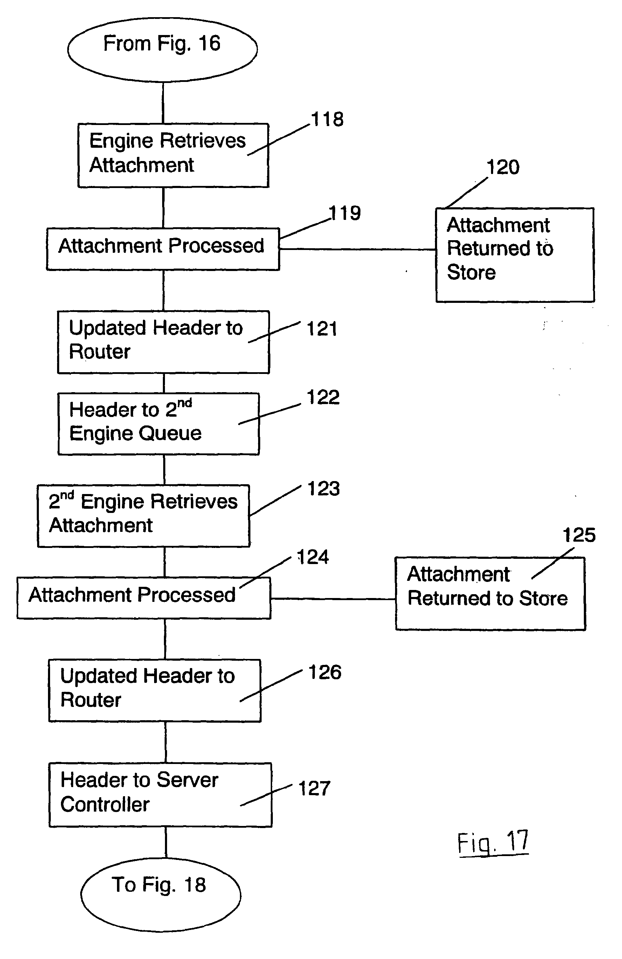

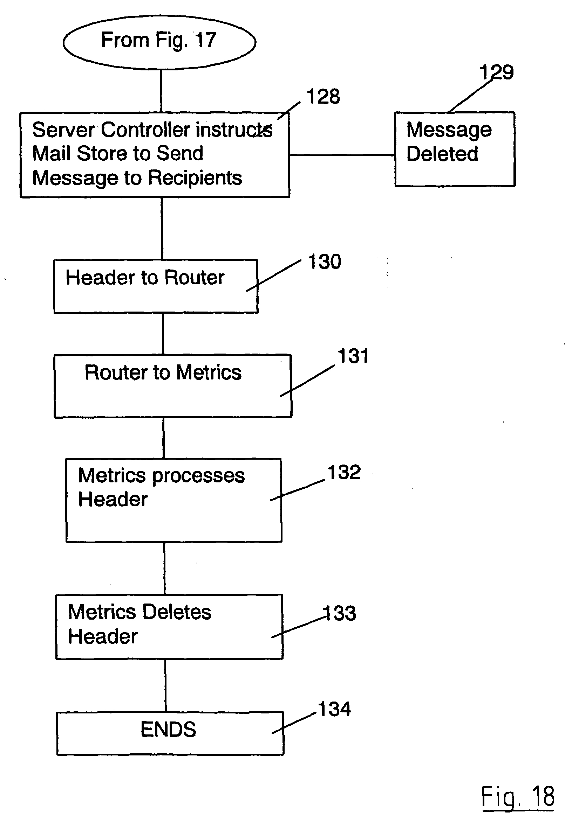

Referring now to Figs. 15 to 18 inclusive, there is shown, in simplified flow diagrammatic form, the handling of an email message having the following features:-
1. Address to one single person.
2. Attachment compressed which requires decompression.
3. Subsequently, two operations are required on the compressed attachment.
4. Management policy requires that any email addressed to this particular addressee is also copied to department head. This is already in the profile controller.
5. Storage of the conversion is required so that when an email is transmitted from anyone within the receiving organisation to the present sender that the email can be sent in the correct format, for example, it might be required that the attachment be sent in a form suitable for reception by the other body which attachment, as well as being decompressed, might need to be converted from the format used by anyone within the receiving organisation for the text to the format used by the present sender for the same text. A typical case would be a document which the recipient will correct by additions and deletions and return subsequently to the sender.

Referring now to Figs. 15 to 18 inclusive, in step 100, an email is received. In step 101, the message is stored and in step 102, the attachments are stored. In step 103, a header is prepared as an XML message by the server controller including a classification of the mail stored by the mail store controller as a particular type of message. When the header has been prepared, in step 104 it is sent to the router which reads the header and realises that this is the first time it has received this header and therefore, it is sent directly to the profile controller in step 105. In step 106, the profile controller reads the profile database and discovers that the message has to be sent to the department head also, and the profile controller, in step 107, changes the header. Then, in step 108, the header is returned to the router. In step 109, the router sends the header to the queue for the necessary decompression engine. In step 110, the decompression engine receives the header from the queue and retrieves the attachment. In step 111, the attachment is decompressed and in step 112, the attachment is returned to store. In step 113, the updated header is returned to the router and in step 114, the decompressed message is now sent to the server controller and in step 115, the header is again altered as the email is reclassified and in step 116, the updated header is sent to the router. In step 117, the header is sent to the new processing engine queue. In step 118, the first processing engine retrieves, the attachment and in step 119, the first processing engine processes the attachment which is returned to the store in step 120. In step 121, the updated header is sent from the first processing engine to the router. In step 122, the updated header is now sent to the second engine queue and in step 123, the second engine retrieves the attachment. In step 124, the second engine processes the attachment and in step 125, the attachment is again returned to the store. In step 126, the new updated header is sent back to the router. In step 127, the router sends the header to the server controller which subsequently passes the header to the mail store.

In step 128, the server controller instructs mail store to send the message to the various recipients and in step 129, the message is deleted. In step 130, the header is sent again to the router and in step 131, the router sends the header to the metrics processor and in step 132, the header is processed and the data stored in the metrics and profile databases. This data includes details of the processes that have been carried out on the email and details of the original sender and the original formats. In step 133, the metrics processor deletes the header and in step 134, the session ends.

If at some future date, any one within the receiving organisation sends an email to the original sender as above, the profile database will have stored information necessary to ensure that, for example, an outgoing email with an attachment will be sent in the correct format to the intended recipient.
It is worthwhile considering briefly typical programming required. As explained above, firstly the message needs to be intercepted and removed from the system. The removal from the mail system involves breaking the email down into its constituent parts. As stated already, an email is generally made up of routing data, namely,
- recipient list
- originator address
and then constituent data, such as:
- subject
- message body
- attachment(s)

The attachment(s) and message body are stored to disk in a unique location referenced by a unique ID associated with this mail message. This ID if not already present within the mail system ( Some mail systems provide one ) will be provided by the system.

The XML file is then generated as a header. This file has a number of purposes. In its initial state it is used to provide links to the parts of the now fragmented email, and contains within it file references that point to the original mail elements which are now held within the mail store / attachment store. Shown below is a sample of what the file may look like at this stage.

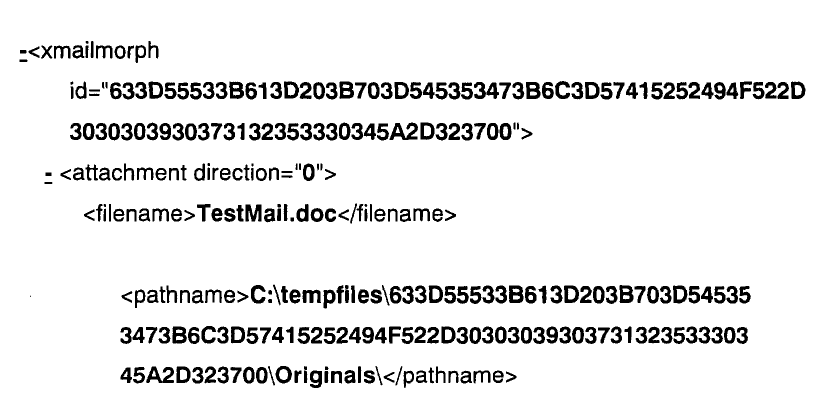

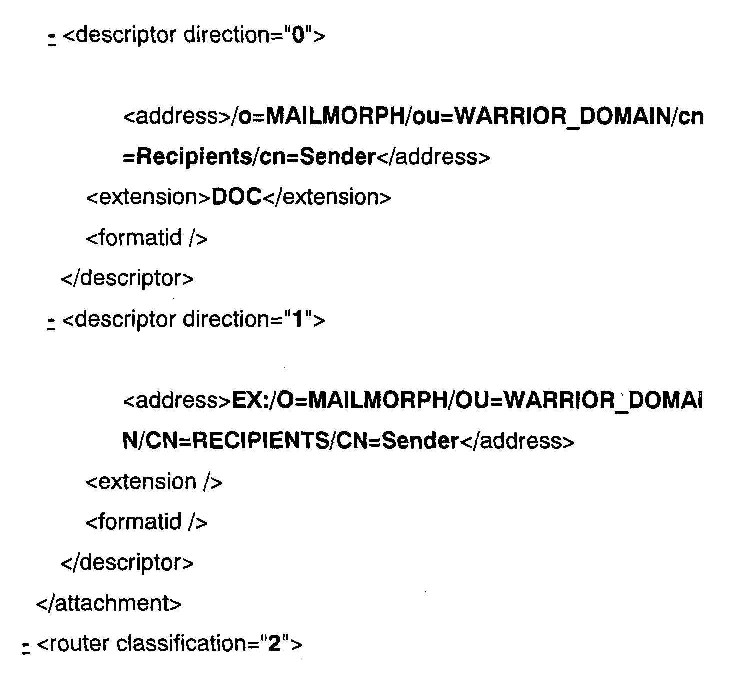

Note the last line in the XML is the router classification or message classification.

As the XML file travels through the system it is examined for information by the various processing engines, and each engine will update the XML and add to the information contained within it.

After the server controller has initially created the XML file it is then passed to the router. The job of the router is to determine based on the classification provided by the server controller which processing engines the file needs to go to and the order of that processing. The router does this with reference to routing tables and updates the information within the XML. Shown below is a sample of what the XML may look like once it has been through the router. Everything shown below the line has been added by the router engine. MailMorph is the Trade Mark used for the system.

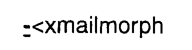

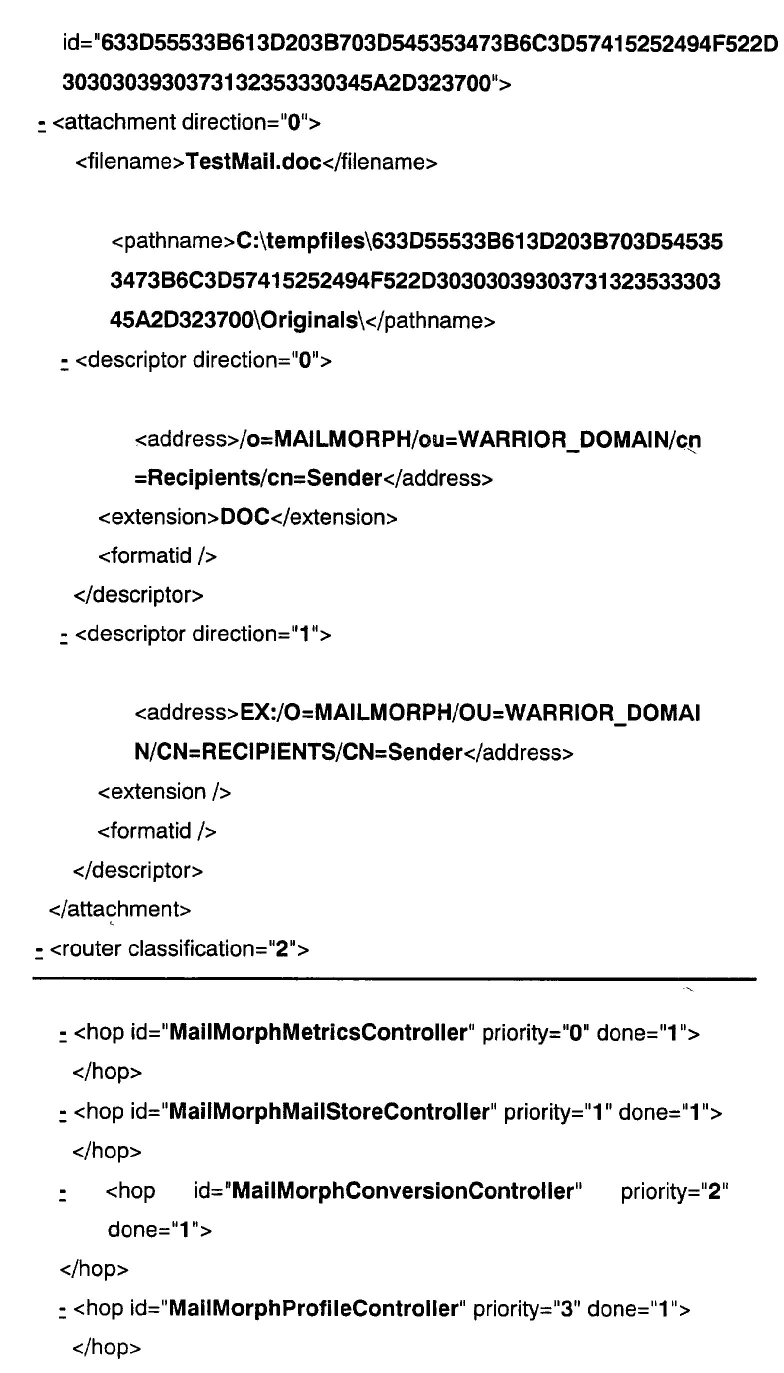

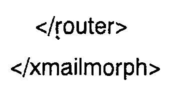

In the XML header, at this point it is clear which transformation engines the message will be sent to and the order in which it will be sent. Note that at this point there are no instructions contained within the XML header as to what processing should take place by any particular engine, this is the job of Profile Controller. Some engines, such as the profile controller will have a default behaviour for which no instructions are necessary.

When the profile controller receives the XML file, it consults the profile database which contains policies. A determination of the instructions for each transformation engine is made based on the users position in the organisation structure, and the policies associated with various points within the structure. The profile controller then writes this information into the XML file.

The file below shows how the XML header may look after the profile controller has processed it. The area between the lines has been added by the profile controller.

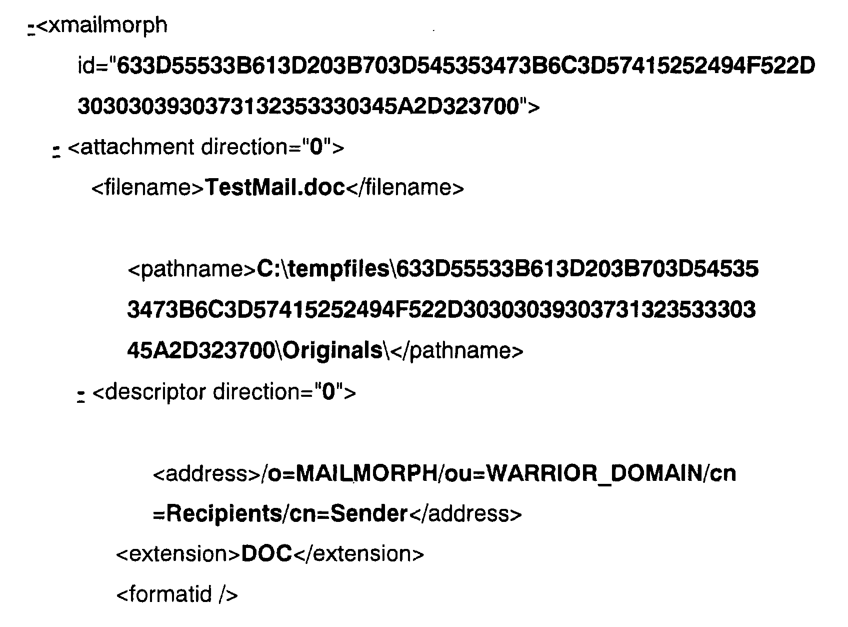

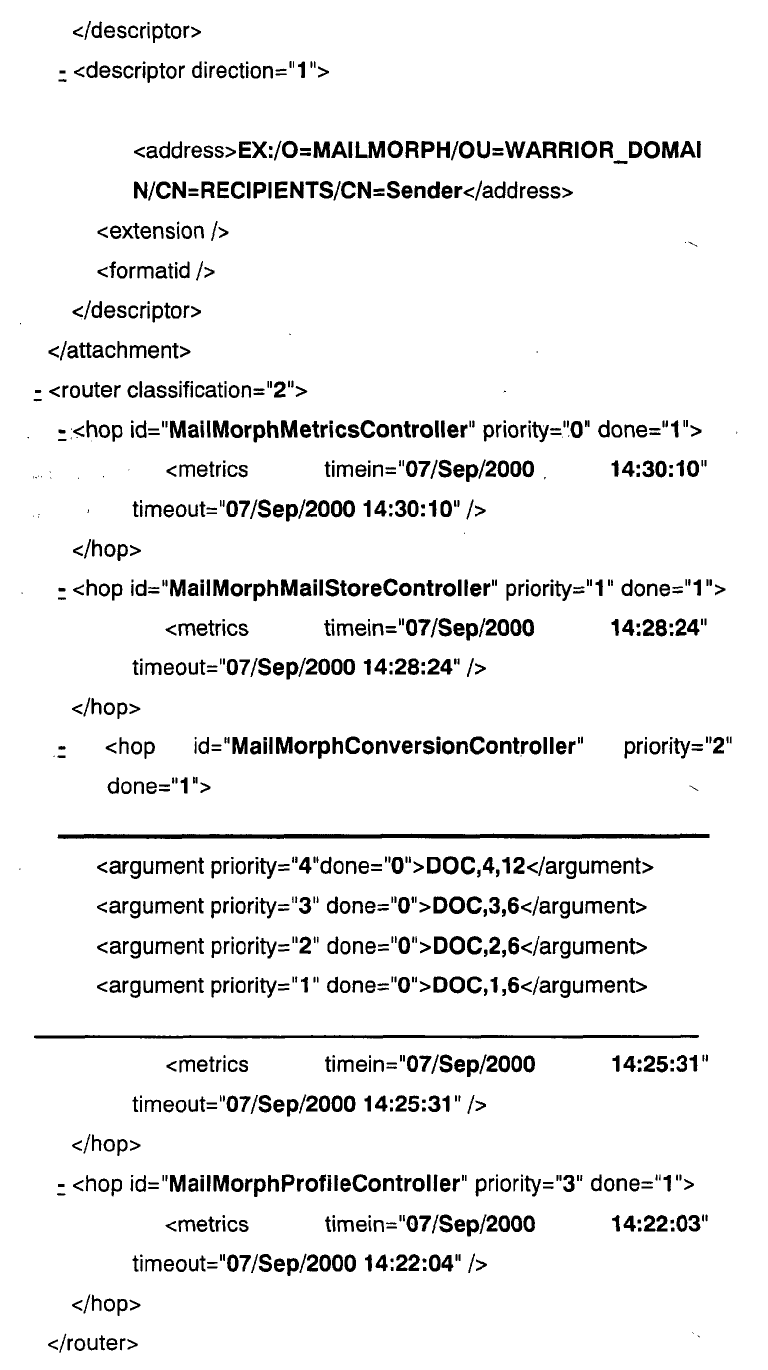

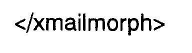

The arguments shown between the lines are instructions for the conversion controller. This tells conversion controller that if the attached file which was of a .DOC type is determined to be either file format 1,2 or 3 then it is to be converted to file format 6. If however it is determined to be in file format 4 then it should be converted to file format 12.

It should also be noted from the XML that as the XML file is processed through each transformation engine, 'Metric' information is added. This information tells us the time that a particular engine started, and completed it's work on the file, attachment or body.

One of the first tasks that server controller carries out is that of classifying the email. This is based on an assessment of the 'Shape' of the mail. The word shape is used as the assessment is not only based on content specific searching but also takes into account the presence or absence of known object structures and attributes. Items that contribute to / make up the shape of the email would include the following.
- The number of recipients.
- Whether the mail has one or more attachments.
- The size of the mail and/or its attachments.
- The rough format of the attachments (i.e. Known to be compressed).
- Whether the mail is encrypted with a known encryption algorithm.
- Whether the origin of the mail is internal or external to the organisation.
- Whether the mail is marked as urgent.

This list is not exhaustive but gives a feel for the type of factors that are taken into consideration when assigning a classification. In the initial roll out of the system not all of these factors are considered. Further, over time, additional factors, as appropriate, may be easily added to the system.

Message classification is critical to the operation of the system, as the routes through the transformation engines are determined based on classification only. The process of classifying the message is really based on a best guess as to the shape of the email. There may be cases when only a very rough classification can be made, and the message would need to be processed through some of the engines before a more precise classification can be made. One example of this would be when a message comes in with a compressed file attached. The server controller has no way of knowing if the compressed file actually contains multiple files. In this case before a more precise determination can be made, the compressed file needs to be decompressed. The message is therefore classified in the initial instance as a compressed mail, and assigned a route that will see the compressed file being decompressed and then returned to the server controller where a more precise classification can be made. Once the message is re-classified by the server controller it may be sent out again on another route.

If an event occurs within the system such as an error on one of engines, then the message can be re-classified immediately by the failing transformation engine and so sent through a different sequence of engines. This allows the error to be dealt with or the mail to be forwarded to the original recipients in its original format.

One of the advantages in the system is that processing engines may not necessarily be stored on the system but can be accessed from a third party such as an ISP and downloaded or used as required. All that needs to be stored on the system is instructions to access the processing engine as required.

Since more than one processing engine can be used it is envisaged that a processor engine database may be provided listing all the processor engines available for carrying out a particular processing operation both singly and in combination together with its system resource usage and means for allocating a processor engine or processor engines to carry out the particular operation having regarding to the information in the database.

It will be appreciated that a variety of processors, computers, etc. may be used to carry out the invention and that some of the invention may be carried out in one jurisdiction and other parts in another jurisdiction. It will also be appreciated that the system according to the present invention may be embodied in the one computer and that further, a computer program comprising programmed instructions for causing one or more computers to carry out the method can be used and similarly the computer program could be embodied on a record medium, computer memory, read only memory, or indeed in many ways.

Essentially, the invention therefore provides for a user an automatic process for the conversion into an understandable format, of an email received for transmission to an intended recipient, where the email is not in a format suitable for reading by the recipient or is not in a format considered by other people dealing with that email to be in the form that they want it to be received by the particular organisation. This latter situation normally would occur where the recipient is a member of an organisation. Essentially, in accordance with the invention, the conversion is performed by apparatus capable of receiving the message and having access to processing engines capable of converting the email into the required format. The apparatus is therefore programmed in such a way as to carry out the method as described above.

What must be appreciated in accordance with the system of the present invention is that one of the major features is that each processor is effectively a stand alone processor connected only to the router and thus additional processors can easily be added or subtracted to the system. All the processor does is have a database to store headers for forming a queue and then the processor accesses those headers. Having accessed the headers, then it is able to retrieve the email from its store, process the email, return it to its store and then simply update the header, sending the header back to the router. Thus, once the router has sufficient to identify the processor, processors may be added and subtracted as required.

The present invention will be particularly useful for any organisation with more than one mail user which can ensure that the automatic processing of all emails that come into the organisation is carried out in a timely and efficient manner. Similarly, any application service provider who is providing software systems to external clients will use the invention as it will be particularly advantageous to them to ensure that everything is transmitted to their clients in the most efficient way in the sense that their main aim will be to ensure that they transmit information and emails to clients in a totally understandable format and the fact that they can then read and understand emails from their clients, while important to them, will not from a marketing viewpoint, be as important as ensuring that their clients and customers receive understandable emails. Similarly, any Telecoms operator distributing mail to phones may wish to use the invention as will any internet service provider that is operating a mail service for external clients.

In the specification the terms "comprise, comprises, comprised and comprising" or any variation thereof and the terms "include, includes, included and including" or any variation thereof are considered to be totally interchangeable and they should all be afforded the widest possible interpretation.

The invention is not limited to the embodiments hereinbefore described but may be varied within the scope of the claims.

## Claims

1. A method in an email processing assembly having a mail server, processors, processor engines and storage means associated therewith for the distribution of an email to an intended recipient in a predetermined format suitable for the recipient, the email having an initial header comprising email data comprising: routing data including originating data, address data identifying the intended recipient; constituent data indicating the nature of the email; and content data comprising reference to the components of the email message itself, the email being received in a mail server **characterised in that** the following steps were carried out, prior to receiving the email, to prepare the processing assembly to carry out the method:-
providing a plurality of classifications of emails from possible types of constituent data; and
allocating at least one operation with a suitable instruction associated therewith to be carried out for each classification as a classification instruction list;
and in which, on an email message being received, the steps are carried out of:-
accepting the email from a mail server in a mail store memory;
allocating a classification to the email;
preparing a system header from the classification and the email data;
storing the email message with the system header in at least one unique location in a mail store database;
reading the system header;
retrieving the appropriate instruction from the classification instruction list;
sending an instruction to carry out the operation on the message;
retrieving the message from the mail store database;
carrying out the operation on the message;
entering a record of the completion of the instruction in the header to provide a revised system header;
storing the email in the mail store; and
reading the revised system header and if the email is suitable for sending to the intended recipient, transmitting the email in accordance with the routing data in the system header.

2. A method as claimed in claim 1 in which, when the classification allocated to an email requires the carrying out of more than one instruction, the instructions are carried out in a predetermined order, the system header being updated each time an instruction is carried out to provide a new system header.

3. A method as claimed in claim 1 or 2, in which, on carrying out the instruction or the last of the instructions, the email is not suitable for sending:
the header is read again;
a new classification is allocated to the email;
a new system header is prepared from the new classification and the routing data; and
then the operations required by the new system header are carried out.

4. A method as claimed in any preceding claim, in which, on reading the routing data of the email, additional routing data is provided.

5. A method as claimed in any preceding claim, in which the classifications are chosen from one or more of:-
single recipient with no attachment,
single recipient with multiple attachments,
single recipient with compressed attachments,
single recipient with encrypted attachments,
multiple recipients with no attachments,
multiple recipients with multiple attachments,
multiple recipients with compressed attachments,
multiple recipients with encrypted attachments.

6. A method as claimed in any preceding claim, in which the email data comprises one or more of:-
message ID,
number of recipients,
recipient addresses,
data received,
original address,
original display name,
subject,
message text,
size of email,
encoding format,
encryption,
external origin,
internal origin, and
priority attached.

7. A method as claimed in claim 6, in which, when there are attachments, the email data comprises one or more of:-
name,
path,
position, and
type.

8. A method as claimed in any preceding claim, in which the classification allocated to the email is chosen having regard to the email data.

9. A method as claimed in any preceding claim, in which, on retrieving the instruction from the classification instruction list:-
the instruction is stored in a processors routing database as a queue for a processor engine chosen to carry out the operation in response to the instruction;
the processor engine accesses the instruction;
the message is retrieved from the mail store database;
the processor engine carries out the operation on the message; and
the revised system header is returned to the routing database for
further routing of the email.

10. A method as claimed in any preceding claim, in which the preparation of the system header includes allocating a priority to the email.

11. A method as claimed in claim 10, in which the priority allocated to each email is used to queue the emails in order of priority for the carrying out of an instruction.

12. A method as claimed in any preceding claim in which, on an instruction requiring a specific operation to be carried out for which there is more than one processor or more than a number of processors capable of carrying out the instruction, the header is read and optimum choice of the processors is made.

13. A method as claimed in claim 12 in which:-
there is provided a processor resource database in which are contained all the processors for carrying out a particular instruction listed singly and in combination as individual processor engines;
a system resource usage is listed for each processor engine; and
a processing time for the instruction to be carried out is listed for each processor engine.

14. A method as claimed in claim 10 or 11 and 13, in which the priority allocated is compared against the resource usage and the processor time to obtain the optimum processing schedule.

15. A method as claimed in any preceding claim in which, on receiving the same email for transmission to more than one recipient, each time the email is retrieved for transmission to another recipient, if the instruction is identical, the previously transmitted email is transmitted to the new recipient.

16. A method as claimed in any preceding claim in which on transmitting the email, the identifier of the sender is stored together with the instructions carried out for transmittal between sender and recipient and on the subsequent sending of an email to the original sender, the instructions are retrieved and used to reformat the outgoing email for ease of receipt by the original sender.

17. A method of setting up a processing assembly having a mail server, processors and storage means associated therewith for the distribution of an email to an intended recipient in a predetermined format suitable for the recipient, the email having an initial header comprising email data comprising: routing data including operating data, address data identifying the intended recipient; constituent data indicating the nature of the email; and content data comprising reference to the components of the email message itself, the email being received in a mail server **characterised in that** the initial steps are carried out of:-
providing a plurality of classifications of emails from possible types of constituent data;
allocating at least one operation with a suitable instruction associated therewith to be carried out for each classification as a classification instruction sheet so as to allow the processing assembly to, on an email message being received, carry out the steps of:-
accepting the email from a mail server in a mail store memory;
allocating a classification to the email;
preparing a system header from the classification and the email data;
storing the email message with the system header in at least one unique location in a mail store database;
reading the system header;
retrieving the appropriate instruction from the classification instruction list;
sending an instruction to carry out the operation on the message;
retrieving the message from the mail store database;
carrying out the operation on the message;
entering a record of the completion of the instruction in the header to provide a revised system header;
storing the email in the mail store; and
reading the revised system header and if the email is suitable for sending to the intended recipient, transmitting the email in accordance with the routing data in the system header.

18. A method as claimed in any preceding claim, in which on receiving an email, the email is transmitted to the processing assembly remote from the recipient of the email and the email is re-transmitted to the recipient in the predetermined format.

19. A computer program comprising program instructions for causing one or more computers to carry out the method as claimed in any preceding claim.

20. A computer program as claimed in claim 19 embodied on a record medium.

21. A computer program as claimed in claim 19 embodied on a computer memory.

22. A computer program as claimed in claim 19 embodied on a read only memory.

23. A computer programmed to carry out the method of any of claims 1 to 18.

24. An email distributed using the method as claimed in any of claims 1 to 18.

25. An email which was originally in one format and which has had a transformation into another format carried out by a method as claimed in any of claims 1 to 18 and in which the transformation was carried out remote from the recipient.

26. A user interface for the conversion into an understandable form of an email received for onward transmission to an intended recipient where the email is not in a format suitable for reading by the recipient said conversion being performed by apparatus capable of receiving the message and having processing engines (7, 8, 9) for receiving the email and converting it into the required format, the apparatus being programmed to carry out the method as claimed in any of claims 1 to 18.

27. A system for the reception of an email and the processing of it prior to onward transmission to its intended recipient comprising:-
a mail store controller (3) for receiving the email, including a server controller (4) for reading the email and generating and writing a header for the email to classify the email;
a plurality of processors (12,10,14) ; and
a router (15) for receiving the header of the email and in accordance with the classification, to determine the processors (12, 10, 14) to which the email is to be sent and the order in which it is to be sent to the processors (7, 8, 9) prior to the email being sent on to the recipient.

28. A system as claimed in claim 27 , in which there is provided a separate store (6) having a unique location for each attachment.

29. A system as claimed in claim 27 or 28, in which each processor (10,12,14) is a separate stand alone processor connected only to the router (15) and in which there is provided:-
a database to store headers for forming a queue (18, 19, 20) for each processor (10, 12, 14) ;
means to retrieve the attachment from the store (6) for processing and to return the processed attachment to the store (6);
means to enter into the header confirmation of the processing; and
means to return the updated header to the router (15).

30. A system as claimed in any of claims 27 to 29, in which one of the processors (10, 12, 14) is a profile controller (12) and associated profile database (13) for the reception of management information, the profile controller (12) being connected to the router (15) to alter the header in response to the information in the profile database (13).

31. A system as claimed in any of claims 27 to 30, in which the processor (10, 12, 14) comprises a processor (10, 12, 14) operated by a third party and the router (15) includes means to establish a communications link with the processor (10, 12, 14).

32. A system as claimed in any of claims 27 to 31, in which there is provided a processor engine database in which there is listed the processor engines (7, 8, 9) available for carrying out a particular processing operation both singly and in combination together with its system resource usage and means for allocating a processor engine or processor engines (7, 8, 9) to carry out the particular operation having regard to the information in the database.
